# EUROPEAN PATENT APPLICATION

(11) **EP 1 926 255 A1**
(43) Date of publication of application: **28.05.2008**
(21) Application number: 06124732.6
(22) Date of filing: 24.11.2006
(51) Int. Cl.: H04L 12/56

(54) **A positioning and recording information system with multi-hopping means for rescue on the sea**

(71) Applicant: Su, Hsin-Chi, Taipei (TW)
(72) Inventor: Su, Hsin-Chi, Taipei (TW)
(74) Representative: Viering, Hans-Martin

(57) **Abstract**

A positioning and recording information system with multi-hopping means for rescue on the sea. At least two stations are utilized to transmit navigation information to one another in the form of data packets. The data packets are received and temporarily stored in the stations. The steps of transmitting, receiving and storing are repeated to form a network topology which records a moving track of a station set on a ship. As the ship meets with misfortune on the ocean, the latest data packet transmitted by the ship facilitates positioning so that the disastrous position is identified. Consequently, the rescue can be started immediately and the efficiency is improved as compared with traditional ways.

## Description

### FIELD OF THE INVENTION

The present invention is related to a positioning and recording information system, and more particularly to a positioning and recording information system with multi-hopping means for rescue on the sea.

### BACKGROUND OF THE INVENTION

About 70% superficial content of the earth is composed of the ocean. Accordingly, no matter how human culture and technology develop, we depend on the ocean extremely, Nowadays many governments' ocean policies put emphasis on the issues about ocean traffic safety, rescue on the ocean and fishery resources management and so on.

Regarding to the issue of rescue on the ocean, the navigation diaries traditionally provide navigation information such as the location, speed and message of a ship. However, most navigation diaries are not helpful to rescue immediately when a ship accident occurred, owing to the navigation diaries damaged and lost.

At present, there are three systems used for rescue on the ocean including Global Maritime Distress and Safety System, Ship Security Alert System, and Automatic Identification System. When a ship meets with misfortune, the three systems spread out the SOS signals through the Global Positioning System, and the rescue is executed in the area where the SOS signals are transmitted.

Because the Global Positioning System costs expensively, the ship company is usually burdened with huge expense and cannot afford to transmit signals frequently. The latest information received by the receiving end is not the same as the latest information transmitted by the ship, so there are often great mistakes in rescue on the ocean, such as delayed rescue, wrong rescue areas, etc. In the research related to the Automatic Identification System in LR Research Unit, the system often transmits insufficient messages about the destination, speed, direction and so on. The insufficient messages are often the key factors leading to inefficient rescues on the sea.

U.S. Patent No. 6,778,809 B2 published on Aug. 17,2004, titled "MOBILE NETWORK FOR REMOTE SERVICE AREAS USING MOBILE STATIONS" disclosed a system and method for transmitting and receiving data in a mobile communication network. The system includes one or more mobile stations for transmitting data in a mobile digital network. The mobile stations are configured to act as buffer/repeaters by storing and forwarding data signals until they are received by a designated destination station. The hopping means is utilized in the system to form a mobile network. However, in an international shipping route, the distance from one station to an adjacent station is usually too far. The hopping means meets the problems below:
1. The data origin too far away from the destination resulting in the excessive hop count, and the communication efficiency decreasing with the hop count increasing.
2. All the stations in the shipping route are not connecting all the time so that it is often failed to transmit data signals.

Resulting from the problems mentioned above, once a ship meets with misfortune, the received data signal is insufficient to identify the shipwreck location. It is urgent to find out the way to position more efficiently to obtain the correct position where a ship accident is occurred to perform rescues.

### SUMMARY OF THE INVENTION

The problems set forth above may at least in part be solved by a system that is capable of utilizing the multi-hopping means to provide sufficient messages about shipwrecks for positioning and rescue on the sea.

In one embodiment, the positioning and recording information system with multi-hopping means for rescue on the sea, the characteristic is that at least two stations utilized for transmitting, receiving and storing information through digital communication and Internet access for mobile vessels. The data packets are temporarily stored in the temporary repositories of the stations. The system comprises at least one fixed station representing a destination station and a plurality of mobile stations. Wherein the first mobile station transmits data packets to the second and third mobile station and stores the data packets. After the data packets received and stored in the second and third mobile station, the both stations transmit and store feedback data packets to the first mobile station. In addition, the second mobile station transmits a data packet to the third mobile station and stores the data packet. After the data packet received and stored in the third mobile station, the third mobile station transmits and stores a feedback data packet to the second mobile station. Eventually, the data packets are received and stored in the destination station.

Every station having an identification code that is the Internet Protocol address. The fixed station could be set at a port and on a buoy. The mobile station could be set on a ship. The stations transmit data packets to one another to form a network. After a series of transmitting, the data packets are received and stored in the destination station, which processes the data packets into applicable information. The data packets include the information such as the station identification codes, the time when the data packets transmitted and received, and the position where the data packets transmitted and received etc, wherein the position is showed by the longitude and latitude. The basis of digital communication could be the IEEE 802.11 standard, the radio, the infrared ray and the Worldwide Interoperability for Microwave Access. In the procedure of the data packets processed, the data packets are temporarily stored in the temporary repository of the stations, and the temporary repository could be a disk or a network disk. Besides, the data packets are composed of a plurality of bits, and they could be composed of the binary, the octonary or the hexadecimal systems. When the mobile stations are set on ships, the data packets further comprise the navigation information such as the navigation direction, the navigation speed, the serial number of current route plan point, the distance from the route plan point, the estimated time of arrival and the distance diverging from the route, etc.

The system is utilized to transmit data packets with the multi-hopping means that is based on the IEEE 802.11 standard instead of the Global Positioning System. Without the huge expense due to the Global Positioning System, the ship company is able to afford to transmit and update signals frequently. The system improves the communication efficiency of the network with the multi-hopping means. Thusly, whenever and wherever a ship accident is occurred, the information needed for the rescue is identified by the latest data packet that is transmitted and received. The identified location is therefore more closed to the disastrous position so as to rescue more efficiently.

### BREIF DESCRIPTION OF THE DRAWINGS

The foregoing aspects, as well as many of the attendant advantages and features of this invention will become more apparent by reference to the following detailed description, when taken in conjunction with the accompanying drawings, wherein:
Fig.1 illustrating transmitting way of the positioning and recording information system with multi-hopping means for rescue on the sea
Fig.2 illustrating the data packets of the positioning and recording information system with multi-hopping means for rescue on the sea;
Fig.3 illustrating more details of the transmitting way of the positioning and recording information system with multi-hopping means for rescue on the sea;
Fig.4 illustrating the station of the positioning and recording information system with multi-hopping means for rescue on the sea; and
Fig.5 illustrating the mobile station moving and transmitting to form a moving track for positioning.

### DESCRIPTION OF THE PREFERRED EMBODIMENT

The foregoing and other objects, features and advantages of the present invention will be more readily understood upon consideration of the following detailed embodiment's description of the invention, taken in conjunction with the following drawing.

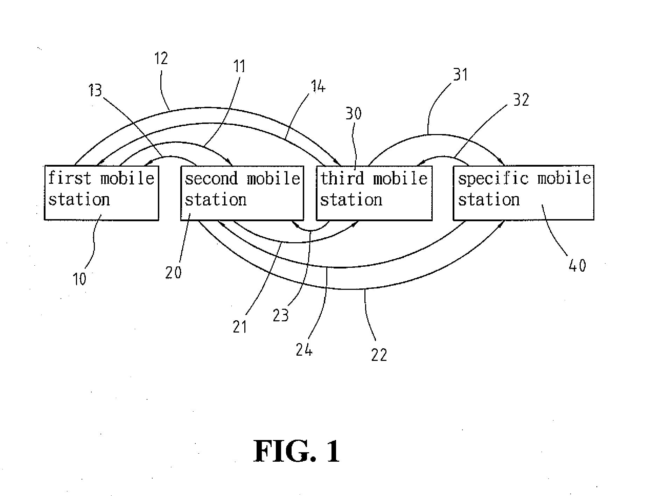

With reference to Fig.1, at least two stations are utilized for transmitting, receiving and storing data packets through digital communication and Internet access for mobile vessels. In the signal-transmitted area of the first mobile station 10, the information of the first mobile station 10 is processed into a data packet 11. The data packet 11 is transmitted from the first mobile station 10 to the second mobile station 20, and is stored in the temporary repositories of both stations. If the third mobile station 30 exists in the signal-transmitted area of the first mobile station 10, the information of the first mobile station 10 is also processed into another data packet 12.
The data packet 12 is transmitted from the first mobile station 10 to the third mobile station 30, and is stored in the temporary repositories of both stations. After the second mobile station 20 and third mobile station 30 receive the data packet 11 and 12, the feedback data packet 13 and 14 are respectively transmitted from the second mobile station 20 and third mobile station 30 to the first mobile station 10 and are stored in the temporary repositories of the stations.

In the signal-transmitted area of the second station 20, the information of the second station 20 and the data packet received by the second station 20 are both processed into a data packet 21. The data packet 21 is transmitted from the second mobile station 20 to the third mobile stat ion 30, and is stored in the temporary repositories of both stations. The data packet 22 is also transmitted from the second mobile station 20 to the specific mobile station 40, and is stored in the temporary repositories of both stations. After the third mobile station 30 and specific mobile station 40 receive the data packet 21 and 22, the feedback data packet 23 and 24 are respectively transmitted from the third mobile station 30 and specific mobile station 40 to the second mobile station 20 and are stored in the temporary repositories of the stations.

In the signal-transmitted area of the third mobile station 30, the information of the third mobile station 30 and the data packet received by the third mobile station 30 are both processed into a data packet 31. The data packet 31 is transmitted from the third mobile station 30 to the specific mobile station 40, and is stored in the temporary repositories of both stations. After the specific mobile station 40 receive the data packet 31, the feedback data packet 32 is transmitted from the specific mobile station 40 to the third mobile station 30 and is stored in the temporary repositories of the stations.

The data packets are transmitted between a plurality of station to form a network topology and are well stored in the temporary repositories. In the network topology, if one of the stations meets with misfortune, the location where the accident is occurred is identified through the latest data packet received by other stations.

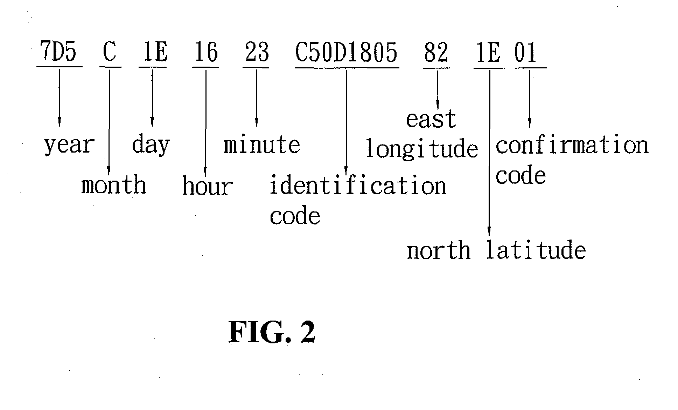

The data packets are composed of a plurality of bits, and they could be composed of the binary, the octonary or the hexadecimal systems. The content of a data packet is showed in a 24-bits code if it includes the identification codes of stations, the time when the data packets transmitted and received, and the position where the data packets transmitted and received. The position is showed by the longitude and latitude. For example, 10:35PM, Dec, 10, 2005, at E130°, N30°, a mobile station coded in 197.13.24.05 transmits a data packet that is composed of the hexadecimal system. With reference to Fig.2, the data packet is showed in the form of 7D5C1E1623C50D1805821E01, wherein the first three bits representing year, the fourth bit representing month, the fifth and sixth bits representing day, the seventh and eighth bits representing hour, the ninth and tenth bits representing minute, the eleventh to eighteenth bits representing the identification code that is the Internet Protocol address, the nineteenth to twenty-second bits representing the east longitude and north latitude, and the last two bits representing the confirmation code of the data packet. The confirmation code demonstrates the transmitting states of the data packet, wherein 00 indicating unsuccessfully-transmitting, 01 indicating successfully-transmitting and 02 indicating transmitting again. In brief, the information of the station is digitalized into the data packet with different encoding ways. The encoding ways are not restricted in the bits and information mentioned above.

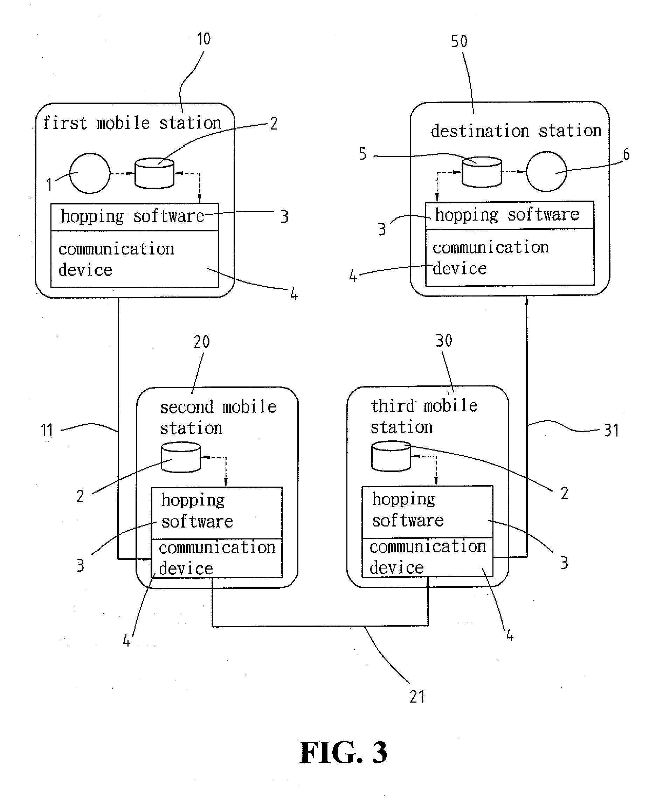

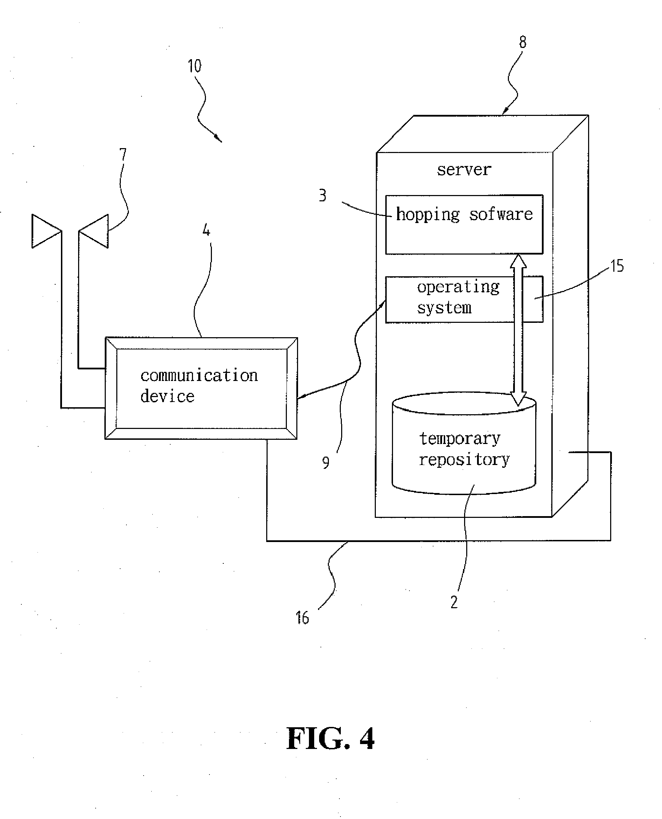

With reference to Fig.3, the data packets transmitted by the stations are temporarily stored in the temporary repositories, wherein the temporary repositories could be a disk and a network disk. The information of the first mobile station 10 is translated into a transmittable data packet by the application program 1 of the first mobile station 10. The data packet 11 is stored in the temporary repository 2 and in the meantime, the data packet 11 is transmitted from the first mobile station 10 to the second mobile station 20 through the hopping software 3 and the communication device 4, wherein the communication device 4 transmitting the data packet through an antenna. After the data packet 11 is received by the communication device 4 of the second station 20, it is stored in the temporary repository 2. In the meantime, the received information and the information of the second station 20 are transmitted in the form of a data packet 21 through the hopping software 3 and the communication device 4 of the mobile station 20 to the third mobile station 30. After the data packet 21 is received by the communication device 4 of the third mobile station 30, it is stored in the temporary repository 2. In the meantime, the information received by the third mobile station 30 and the information of the third mobile station 30 are transmitted in the form of a data packet 31 through the hopping software 3 and the communication device 4 to the destination station 50, wherein the data packet 31 including the information of the first mobile station 10, the second mobile station 20 and the third mobile station 30. Eventually, the data packet 31 is received in the destination station 50, stored in the repository 5 and translated into applicable information by the application program 6 of the destination station 50.
The fixed station of the present invention could be set on a buoy and at a port. The mobile station of the present invention could be set on a ship. If the mobile station is set on a ship, the data packets further comprises navigation information such as the navigation direction, the navigation speed, the serial number of current route plan point, the distance from the route plan point, the estimated time of arrival, and the distance diverging from the route, etc. With reference to Fig.4, the first mobile station 10 comprises a server 8, a communication device 4, an antenna 7 and a power supply 16, wherein the server 8 further comprising an operating system 15, a hopping software 3 and a temporary repository 2. The operating system 15 of the server 8 transmits the information of the station to the hopping software 3 to form a data packet. The data packet is stored in the temporary repository 2. At the same time, the operating system 15 transmits the data packet to the communication device 4 and antenna 7 through the transmitting element 9, and further forwarding to other stations through the communication device 4 and the antenna 7. Besides, the first mobile station 10 receives data packets from other stations through the communication device 4 and antenna 7. The received data packets are transmitted through the transmitting element 9 to the operating system 15, stored in the temporary repository 2, and transmitted to other stations.

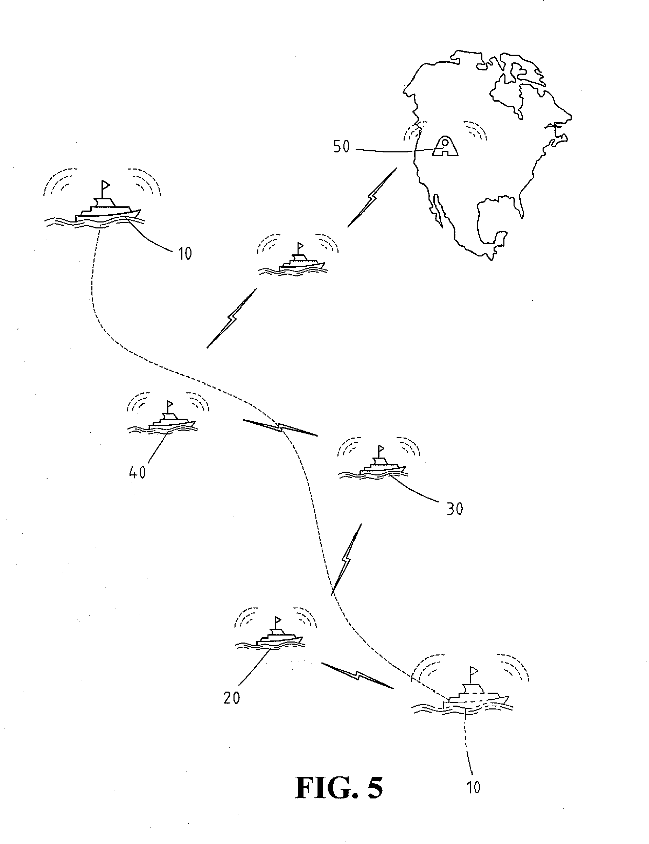

The basis of digital communication in the present invention could be the IEEE 802.11 standard, the radio, the infrared ray and the Worldwide Interoperability for Microwave Access. In this embodiment, the stations communicate on the basis of the IEEE 802.11 standard. With reference to Fig.5, the data packet of the first mobile station 10 is transmitted to other stations by the multi-hopping means in the signal-transmitted area. Since the first mobile station 10 keeps moving and transmitting the data packets, the moving track of the first mobile station 10 is identified by the destination station 50. The destination station 50 processes the received data packets into applicable information for positioning. Therefore, as a ship accident is occurred, the position where the ship signal is disappeared is identified so as that the rescue is started as soon as possible.

The present invention utilizes the multi-hopping means instead of the Global Positioning System to transmit data packets. Accordingly, ship companies can afford to transmit signals frequently. The present invention also improves the communication efficiency of the network. As a ship accident is occurred, the latest information received in the destination station is more closed to the real situation as compared with the prior art, and the rescue could be started as soon as possible.

While the present invention has been described in connection with a preferred embodiment thereof, it will be apparent to those skilled in the art that many changes and modifications may be made without departing from the true spirit and scope of the present invention. Accordingly, it is intended by the appended claims to cover all such changes and modifications as come within the spirit and scope of the invention.

## Claims

1. A positioning and recording information system with multi-hopping means for rescue on the sea, the characteristic is that at least two stations utilized for transmitting, receiving and storing information through digital communication and Internet access for mobile vessels, the data packets temporarily stored in the temporary repositories of the stations, the system comprising:
at least one fixed station, representing a destination station;
a plurality of mobile stations;
transmitting and storing data packets from the first mobile station to the second and third mobile station;
receiving and storing the data packets in the second and third mobile station;
transmitting and storing feedback data packets from the second and third mobile station to the first mobile station;
transmitting and storing a data packet from the second mobile station to the third mobile station;
receiving and storing the data packet in the third mobile station;
transmitting and storing feedback data packets from the third mobile station to the second mobile station; and
eventually the data packets received and stored in the destination station.

2. The system of claim 1, wherein the station comprises an identification code.

3. The system of claim 1, wherein the fixed station is set at a port.

4. The system of claim 1, wherein the fixed station is set on a buoy.

5. The system of claim 1, wherein the mobile station is set on a ship.

6. The system of claim 1, wherein the destination station processes the received data packets.

7. The system of claim 1, wherein the data packets include the information such as the identification codes of stations, the time when the data packets transmitted and received, and the position where the data packets transmitted and received.

8. The system of claim 1, wherein the stations transmit data packets on the basis of the IEEE 802.11 standard.

9. The system of claim 1, wherein the stations transmit data packets on the basis of the radio.

10. The system of claim 1, wherein the stations transmit data packets on the basis of the infrared ray.

11. The system of claim 1, wherein the stations transmit data packets on the basis of the Worldwide Interoperability for Microwave Access.

12. The system of claim 1, wherein the temporary repository is a disc.

13. The system of claim 1, wherein the temporary repository is a network disc.

14. The system of claim 2, wherein the identification code is the Internet Protocol address.

15. The system of claim 7, wherein the position is showed by the longitude and latitude.

16. The system of claim 7, wherein the data packets are composed of a plurality of bits.

17. The system of claim 7, wherein the data packets are composed of the binary, octonary and hexadecimal systems.

18. The system of claim 7, the data packets further include navi gation information when the mobile station is set on a ship.

19. The system of claim 18, wherein the navigation information include the navigation direction, the navigation speed, the serial number of current route plan point, the distance from the route plan point, the estimated time of arrival and the distance diverging from the route.
